Europäisches Patentamt

**European Patent Office**

**Office européen des brevets**

(19)

(11) Publication number: **0 125 422**

**A1**

(12)

# EUROPEAN PATENT APPLICATION

(21) Application number: **84102849.1**

(22) Date of filing: **15.03.84**

(51) Int. Cl.³: **G 10 L 1/04**

(30) Priority: **13.04.83 US 484820**
**13.04.83 US 484730**

(43) Date of publication of application:
**21.11.84 Bulletin 84/47**

(84) Designated Contracting States:
**DE FR GB**

(71) Applicant: **TEXAS INSTRUMENTS INCORPORATED**
**13500 North Central Expressway**
**Dallas Texas 75265(US)**

(72) Inventor: **Rajasekaran, Periagaram**
**1503 Starshadow Dr.**
**Richardson, TX 75081(US)**

(72) Inventor: **Doddington, George R.**
**910 St. Lukes Dr.**
**Richardson, TX 75080(US)**

(72) Inventor: **Schalk, Thomas B.**
**10140 Cimmaron Trail**
**Dallas, TX 75243(US)**

(74) Representative: **Leiser, Gottfried, Dipl.-Ing. et al,**
**Patentanwälte Prinz, Leiser, Bunke & Partner Ernsberger**
**Strasse 19**
**D-8000 München 60(DE)**

(54) **Speaker-independent word recognizer.**

(57) Speaker-independent word recognition is performed, based on a small acoustically distinct vocabulary, with minimal hardware requirements. After a simple preconditioning filter, the zero crossing intervals of the input speech are measured and sorted by duration, to provide a rough measure of the frequency distribution within each input frame. The distribution of zero crossing intervals is transformed into a binary feature vector, which is compared with each reference template using a modified Hamming distance measure. A dynamic time warping algorithm is used to permit recognition of various speaker rates, and to economize on the reference template storage requirements. A mask vector for each reference template is used to ignore insignificant (or speaker-dependent) features of the words detected.

./...

Fig. 2

# SPEAKER-INDEPENDENT WORD RECOGNIZER

## BACKGROUND AND SUMMARY OF THE INVENTION

The present invention relates to a speaker-independent speech recognizer, that is to a machine capable of automatically recognizing and decoding speech from an unknown human speaker.

There are many applications where it would be highly desirable to have such a speaker-independent speech recognizer configured for a small vocabulary. For example, such a word recognizer would be extremely useful for automotive controls and video games. If even a very small control vocabulary were available, many non-critical automotive control functions which frequently require the driver to remove his eyes from the road could be done by direct voice inputs. Control of a car's radio or sound system could be usefully accomplished in this matter. The more sophisticated monitoring and computational functions available in some cars could also be more efficiently met with a voice query/voice output system. For example, if a driver could say "fuel", and have his dashboard reply verbally "seven gallons--refuel within 160 miles," this would be very convenient in automotive control design. Similarly, an arcade video game could be designed to accept a limited set of verbal inputs such as "shoot", "pull up", "dive", "left", and "right". These applications, like many others, are extremely cost sensitive.

Thus, to provide a word recognizer for the large body of applications of this type, it is not necessary that the recognizer be able to recognize a very large vocabulary. A small vocabulary, e.g. 6 to 20 words, can be extremely useful for many applications. Secondly, it is not necessary that a word recognizer for such applications be able to recognize word embedded in connected speech. Recognition of isolated words is quite sufficient for many simple command applications. Third, in many such applications, substitution errors are much more undesirable than rejection errors. For example, if a consumer is making purchases from a voice-selected vending machine, it is much more desirable to have the machine reply "input not understood" than to have the machine issue the wrong item.

Thus, it is an object of the present invention to provide a low cost word recognizer system which has a very low rate of substitution errors.

It is highly desirable to have such word recognizer systems operate with a low computational load. In many attractive applications, a modest error rate can easily be tolerated (e.g. 85% accurate recognition), but the cost requirements are stringent. Thus, it would be highly desirable to have a word recognizer which could be implemented with an ordinary cheap 8 bit microcomputer, together with cheap analog chips, but without requiring any high speed chips or dedicated processors. Of course, it is always possible to do speaker-independent word recognition using a minicomputer or a main frame, but such an implementation has no practical relevance to most of the desirable applications, since most of the applications are cost-sensitive.

Thus, it is an object of the present invention to provide a speaker-independent word recognizer which can be implemented with an ordinary 8-bit microcomputer, and does not require any high-speed or special-function processing chips.

It is a further object of the present invention to provide a speaker-independent word recognizer for a limited vocabulary which can be implemented using an 8-bit microcomputer and analog chips.

A further problem in speaker-independent recognition has been the preparation of an appropriate set of templates. Any one speaker, or any set of speakers with a common regional accent, may pronounce a certain word consistently with certain features which will not be replicated in the general population. That is, the reference templates for speaker-independent vocabulary must not specify any feature of a word which is not a strictly necessary feature. It is always possible to prepare a set of reference templates using emperical optimization, but this can be immensely time consuming, and also precludes the possibility of user-generation of reference templates in the field.

Thus, it is a further object of the present invention to provide a speech recognizer, for which the preparation of reference templates requires minimal empirical input from trained researchers.

It is a further object of the present invention to provide a method for preparing vocabulary templates for a speaker-independent word recognizer which can be implemented by minimally skilled users.

A further difficulty in preparing a speaker-independent word recognizer for cost-sensitive systems is memory requirements. That is, it is highly desirable in many systems where small microcomputers are to be used not to tie up too much program memory with the word recognition algorithm and templates. In particular, in many applications for portable devices (e.g. a calculator or watch which can receive spoken commands), the power requirements of unswitched memory impose a critical constraint. Since speech vocabulary templates must be saved during power-off periods, the amount of memory (CMOS or nonvolatile) required for speech reference templates is a very important cost parameter.

Thus, it is a further object of the present invention to provide a speaker-independent word recognizer which has absolutely minimal memory requirements for storing reference templates.

A further problem in any word recognizer, which is most particularly important in a speaker-independent word recognizer, is that speakers will typically vary, not only in their average rate of speech, but in their timing of the syllable within a given word. Since this information is not normally used by human listeners in making a word recognition decision, it will typically vary substantially among the speech patterns of different speakers. It is therefore necessary that a speaker-independent word recognizer be insensitive to a reasonable range of variation in the average rate and localized timing of human speech.

It is therefore a further object of the present invention to provide a speaker-independent word recognizer which is reasonably insensitive both to average rate and to localized variations in timing of human speech.

It is a further object of the present invention to provide a speech recognitiion system which is reasonably insensitive both to average rate and to localized variations in timing of human speech, which can be implemented using a simple microcomputer with no expensive custom parts required.

A further characteristic which it would be desirable to implement in a speaker-independent word recognition system is the capability for vocabulary change. Thus, for example, in a calculator which can be addressed by spoken commands, it would be desirable to have the set of spoken commands be variable with different modules (for example), or to be user variable as user-customized software is loaded into the calculator.

However, to accomplish this, it is desirable that the reference template set preparation be based on reasonably simple exclusion algorithms, so that a reasonably unskilled user can prepare a new template set. It is also necessary that the template set be addressable, so that templates can be downloaded and substituted.

It should also be noted that the capability to change templates is sensitive to the memory space required for each template. That is, if the memory templates can be stored reasonably compactly, then a mask location can be used to indicate which subset of all possible stored templates corresponds to the currently active vocabulary. Thus, for example, in an automotive control system, a master vocabulary might contain only a set of words indicating various areas of control functions, such as "radio", "wipers", "engine", "computer", etc. After any one of these function areas have been selected, a new localized set of reference templates would then be used for each particular function area. Each localized set of reference templates would have to include one command to return to the master template set, but otherwise could be fully customized. Thus, a localized set of commands for radio control could include such commands as "FM", "AM", "higher", "lower", "frequency", "volume", etc.

Thus, it is a further object of the present invention to provide a speaker-independent recognizer which functions on a limited vocabulary, but in which the vocabulary set can be easily changed.

It is a further object of the present invention to provide a speaker-independent recognizer which functions on a limited vocabulary, but in which the vocabulary set can be easily changed, which can be implemented using simple commercially available microcomputer parts.

A further desirable option in speaker-independent word recognizer systems is the capability to function in a speaker-dependent mode. That is, in such application as automobile controls or speech-controlled calculators, it is necessary that the systems be shipped from the factory with a capability to immediately receive speech input. However, many such devices will typically be used only by a limited set of users. Thus, it is desirable to be able to adapt the template set of a speaker-independent device to be optimized for a particular user or group of users. Such re-optimization could be used to increase the vocabulary size or lower the error rate in service, but requires that the process of modifying templates be reasonably simple.

Thus, it is a further object of the present invention to provide a speaker-independent word recognizer which can be re-optimized easily to operate in a speaker dependent mode, for a specific speaker or for a limited group of speakers.

Thus, it is a further object of the present invention to provide a speaker-independent word recognizer, which can be easily re-optimized to operate in a speaker dependent mode for a specific speaker or for a limited group of speakers, and which can be economically configured using a simple microcomputer and simple analog parts.

Speaker-independent word recognition is performed, based on a small acoustically distinct vocabulary, with minimal hardware requirements. After a simple preconditioning filter, the zero crossing intervals of the input speech are measured and sorted by duration, to provide a rough measure of the frequency distribution within each input frame. The distribution of zero crossing intervals is transformed into a binary feature vector, which is compared with each reference template using a modified Hamming distance measure. A dynamic time warping algorithm is used to permit recognition of various speaker rates, and to economize on the reference template storage requirements. A mask vector for each reference template is used to ignore insignificant (speaker-dependent) features of the words detected.

To achieve these and other objects of the invention, the present invention comprises:

A word recognizer, comprising:

input means for receiving an analog input signal corresponding to speech;

a signal processor, said processor conditioning said input signal according to a predetermined characteristic and measuring zero crossing intervals of said conditioned signal to provide a binary feature vector;

distance measurement means, said distance measurement means comparing said binary feature vector with each of a plurality of binary reference vectors (said reference vectors being organized in sequences corresponding to words) to provide a distance measure at least partially corresponding to a Hamming distance measure with respect to said reference vectors for each successive one of said feature vectors; and

recognition means for recognizing words in accordance with the sequence of said distance measures between each said sequence of said reference vectors and successively received ones of said feature vectors.

According to a further embodiment of the present invention, the present invention comprises:

A word recognizer, comprising:

input means for receiving an analog input signal corresponding to speech;

a signal processor, said processor conditioning said input signal according to a predetermined characteristic and measuring zero crossing intervals of said conditioned signal to provide a feature vector;

distance measurement means, said distance measurement means comparing said feature vector with each of a plurality of reference vectors (said reference vectors being organized in sequences corresponding to words) to provide a distance measure at least partially corresponding to a Hamming distance measure with respect to said reference vectors for each successive one of said feature vectors;

recognition means for recognizing words in accordance with the sequence of said distance measures between each said sequence of said reference vectors and successively received ones of said reference vectors and successively received ones of said feature vectors, said recognizer also performing a dynamic programming step to provide an optimal subsequence match between successively received ones of said feature vectors and said sequences of reference vectors.

## BRIEF DESCRIPTION OF THE DRAWINGS

The present invention will be described with reference to the accompanying drawings, wherein:

Figure 1 shows a block diagram of the word recognizer of the present invention;

Figure 2 shows a block diagram of the preferred hardware implementation of the word recognizer according to the present invention;

Figure 3 is a schematic diagram indicative of the end of word window operation used to identify word endings in the preferred embodiment of the present invention; and

Figure 4 shows an example of classification of a speech input according to its acoustic segmentation.

## DESCRIPTION OF THE PREFERRED EMBODIMENTS

The present invention includes several points of novelty, and also can be implemented in numerous different ways. Thus, the following description will suggest a number of modifications and variations of the present invention, without thereby implying that the present invention is limited to any specific embodiments thereof.

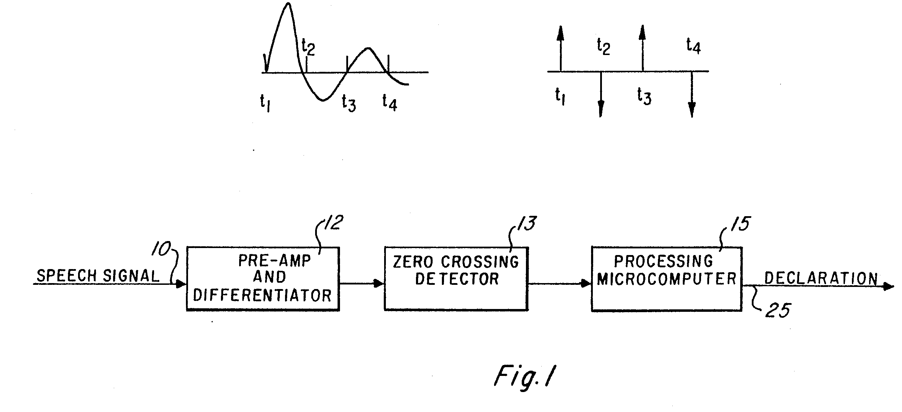

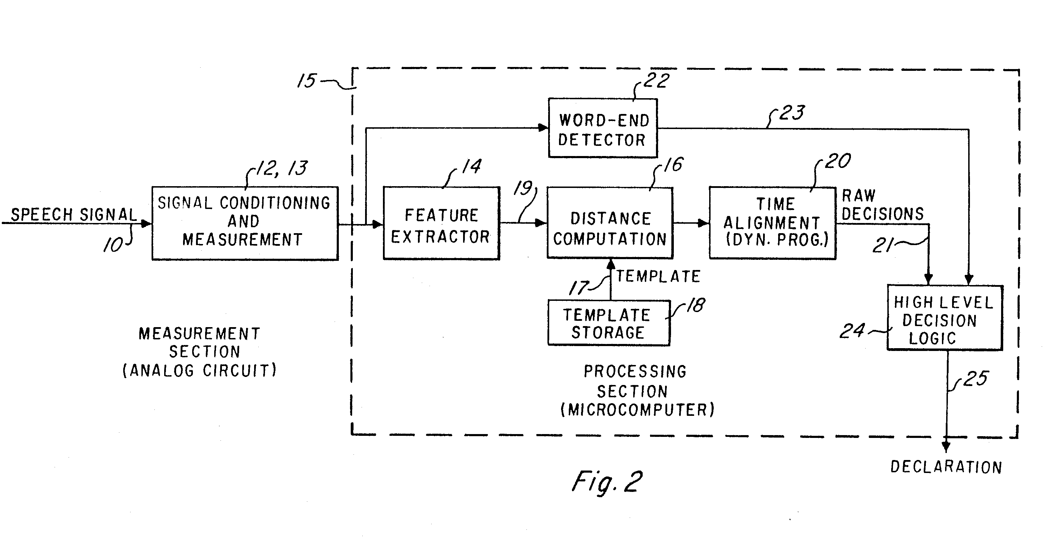

Figure 1 shows generally the organization of the operations used in the word recognizer of the present invention, and Figure 2 shows the functions performed by microcomputer 15 in greater detail. That is, a raw speech waveform 10 is first subjected to the operation of a signal conditioning block (pre-amp and differentiator) 12. The signal conditioning block 12 is preferably used for extremely simple prefiltering operations, e.g. to reject out of band signals. The conditioned input is then received by a zero crossing detector 13, which, in the presently preferred embodiment, simply measures the intervals between zero crossings of the digital wave form received from signal conditioner 12, and feature extractor 14 then simply sorts the various zero crossing interval measurements received during any one frame into bins, to provide integer feature vector 19 which gives a rough measurement of frequency distribution during that frame. The elements of the integer feature vector are then compared with various thresholds, to provide a binary feature vector. This provides the basic feature measurement. Note that no digital-to-analog conversion is required.

The distance measurement 16 then compares the feature vector provided by the feature extractor 14 with the feature vectors received from template storage portions 18. It is important to note two key features of the invention at this time. First, the storage 18 contains not only a feature vector, but also a mask vector, for each template. The mask vector is used to introduce "don't care" weightings into the feature vector stored with each reference template, as will be discussed below. Thus, the set of features of an input frame on which comparison for recognition is performed is selected, and can vary for each frame of each word template. Note that the various word templates stored in storage 18 each comprise a sequence of frames. That is, in a typical case each word template might comprise a sequence of 8-12 frames. (Each of the reference frames is expected to correspond to 2 of the 20 millisecond input frames, but can be warped to correspond to only one of the frames or to as many as 4 of the input frames, as described below.) The time alignment operation 20 selects the best match of each of the reference templates to the current input frame sequence, and provides running measurements 21 of the raw match as output. A word end detector 22 also provides the input to high level decision logic 24, and the word end measurement 23, together with the running cumulative word fit provided by the time alignment block 20, provide the basis for the high level decision logic 24 to make the word recognition decision 25.

The operation of these various components of the invention will now be discussed in greater detail. The speech signal 10, which is typically raw analog input from a microphone (and typically a preamplifier) is provided to a signal conditioner 12.

The filter functions preferably performed by the signal conditioner 12 include only an extremely simple filtering operation. In the presently preferred embodiment, the signal conditioner 12 comprises only an analog differentiator, a Schmitt trigger, and a low pass filter (with a corner frequency of 6.25 KHz) to reject out of band signals, an analog differentiator, and a Schmitt trigger. The differentiator effectively emphasizes the high frequency components in the input signal. That is, the zero crossing characteristics of a signal can easily be dominated by a strong low frequency component, and the use of the first derivative as the function on which zero crossing analysis is performed minimizes this problem.

It should be noted that the filtering functions are not necessarily so minimal. In particular, the zero crossing characteristics of a speech signal are highly sensitive to the frequency preemphasis and also to the phase shifting introduced by a prefiltering section, and a wide variety of prefiltering characteristics may optionally be used, e.g., to provide a more critical distinction between the words in a given vocabulary set or to reject particular noise characteristics. That is, the prefiltering characteristics will substantially affect the extent to which perceptually distinct input frames are measurably distinct in the very limited information provided by the recognition algorithm of the present invention. A wide variety of such filtering characteristics could be introduced in modifications and variations of the present invention, but the principal embodiment of the present invention uses only simple processing functions as noted.

In addition, bandpass filtering can also be used in the signal conditioner, to reject out of band signals, although this is not used in the presently preferred embodiment.

It should be noted that the Schmitt trigger performs a rather important signal processing function, namely center-clipping. That is, where zero crossings of a function including noise are being measured, even a very low noise power, at moments when the function value is near zero, can introduce many spurious zero crossings. To avoid this problem in recognition, center-clipping (using the hysteresis characteristics of the Schmitt trigger) in effect ignores zero crossings unless the waveform reaches a certain minimum value between two adjacent zero crossings. Although a Schmitt trigger is not the only way to accomplish this center-clipping, some such function in the signal conditioner 12 is highly desirable, since it greatly reduces the noise in the low-interval zero crossings.

The actual zero crossing information can be obtained in a variety of ways, as is obvious to those skilled in the art. For example, the analog input signal 10 can be applied to the Schmitt trigger mentioned, or to a polarity sensing saturated output amplifier, to provide a strongly clipped signal, i.e., a sequence of rectangular waveforms of alternating sign. These waveforms can then be converted to logic levels and provided as inputs to a microcomputer 15 which counts the duration of each rectangular waveform portion (that is, the duration of each interval between zero crossings) in terms of clock cycles of the microcomputer. Of course, this function 14 could easily be embodied in SSI logic, with a flip-flop and counters, or otherwise, but the embodiment in a microprocessor or microcomputer 15 is preferred. The clock resolution of the microprocessor is preferably plus or minus 40 microseconds or less, but most commercial microprocessors can meet this. For example, an 8080, a 7-80, or a TMS 7000 are all suitable.

The next step in processing the speech signal is to generate counts of the zero-crossing internal distribution in each frame of a sequence of frames, spaced at a frame period. In the presently preferred embodiment, the frame period is 20 msec, but this frame period can easily be varied. If a longer frame period is used, rapid speech may not be well recognized, but this may be an acceptable tradeoff in some applications for the sake of lower processor load. Similarly, a shorter frame period imposes a higher processor load, but provides a relatively slight gain in performance. Thus, frame periods in the range of 1 to 200 msec are within the scope of the present invention.

It should be noted that the input is not necessarily even divided into frames prior to this stage. That is, an advantage of using a microprocessor to measure the zero crossing invervals is that the microprocessor can at the same time impose the initial division of the analog input signal into frames.

At each frame, a feature vector is generated by Feature Extractor 14 from the input as follows: first, the RMS energy of the analog signal is measured over an interval which need not exactly coincide with the frame period. For example, in the presently preferred embodiment, the energy is measured over an analysis window of 30 msec. This provides some smoothing of the energy values between frames, and precludes missing short high-energy events. In addition, the zero crossing intervals are classified at this time. Again, the analysis window over which the characteristics of the zero crossings are measured need not be exactly the same as the frame period, and is 30 msec in the presently preferred embodiment.

Thus, to generate the feature vector 19, the zero crossing intervals of the analog waveform over a 30 msec interval are examined. The presently preferred method of extracting a feature vector 19 from the multiple zero crossing interval numbers is as follows, but of course a wide range of other expedients could be used to provide a feature vector representative of the distribution of zero crossing intervals. In the presently preferred embodiment, the zero crossing intervals within the 30 msec analysis waveform are sorted into four "bins", where each bin generally corresponds to a bandpass filter. That is, bin 1 counts the number of zero crossing intervals within the analysis window which have durations between seven and 13 samples (one sample is equal to      msec in this embodiment); bin 2 counts the number of zero crossing intervals in the analysis window with a duration between four and six intervals; bin 3 counts the number of zero crossing intervals in the analysis window with a duration of two or three samples; and bin 4 counts the number of zero crossing intervals in the analysis window which have a duration of one sample.  These numbers are preferably accumulated by the microcomputer as the clipped rectangular waveform is received, so that the actual durations of the various zero crossings need not be stored at any point. That is, when the clipped input waveform changes sign, the microcomputer preferably notes the number of clock pulses since the last change of sign, increments the count in the appropriate bin by one, and resets its count register and begins to count the number of clock pulses until the next zero crossing. Thus, the number of zero crossings counted in any one "bin" corresponds generally to the energy which would have been measured through a corresponding bandpass filter, and the distribution over all of the bins provides an integer feature vector, which in the presently preferred embodiment includes four integer numbers.

Next, this integer feature vector is converted to a binary feature vector as follows. For example, the count found in bin 3 is compared to two thresholds to generate elements five and six of the binary feature vector: if the count is greater than a threshold B3L, then element 5 of the binary feature vector is set at 1 (and otherwise remains at zero); if the count in bin 3 is less than a second threshold B3U, then a 1 is entered in element 6 of the binary feature vector, which also otherwise remains at zero). That is, each bin has lower and upper thresholds, which are empirically chosen to maximize the discrimination between words used. In the presently preferred embodiment, the eight thresholds used, expressed in number of sample values, are:

| Bin number | Lower threshold | Upper Threshold |
|---|---|---|
| 1 | 1 | 4 |
| 2 | 4 | 8 |
| 3 | 8 | 16 |
| 4 | 16 | 32 |

Again, it should be noted that the presently operational embodiment has very frequent high-resolution sampling as an initial step, and hence the zero crossing intervals are expressed in samples, but the contemplated best mode of the present invention would not use such expensive high-rate high-resolution sampling, and would use analog stages initially instead, as discussed above.

Thus, the foregoing process has produced a feature vector (eight bits in the presently preferred embodiment) for each frame of the input signal. This feature vector is compared (in distance computation 16) with various reference vectors according to a distance measure, and word recognition is made in accordance with the sequence of distance measures between the sequence of reference vectors in a word template and all or some of the sequence of input feature vectors received.

The distance measure used is essentially a hamming distance measure between the input frame and any particular reference frame, but there is one important additional point of novelty in the distance measure. A mask vector is preferably stored along with each reference vector, to mask the less significant elements of the reference vectors. Thus, the actual template for a word consists of a sequence of pairs of binary vectors: for each reference frame in the word template, both a reference feature vector and a mask vector is stored. For example, if the fourth element of a mask vector is 1, then the fourth element of the corresponding reference vector is used in the distance computation. If the masked vector element is zero, the corresponding element of the associated reference vector is not used in the distance computation. Thus, the distance between the test feature vector TF, and the i-th reference vector RF(i) and mask vector RM(i) is defined by the following logical operation:

$$D_{TF,i} = \text{Hamming } RM(i). \text{ and } . (TF.xor.RF)i))).$$

Thus, $D_{TF,i}$ is the Hamming distance between the test vector TF and the i vector set of the template for the given word. This distance indicates the number of similarities between test feature vector TF and reference vector RF(i), with masking defined by the zero valued elements in the mask vector RM(i).

It should be recognized that this use of a mask vector to exclude insignificant components of each reference vector is broadly novel, and may be modified and varied widely. For example, it is not strictly necessary that the feature and reference vectors be binary, since a binary masking value may be used to mask the results of an analog subtraction step as well. In fact, it is not even strictly necessary that the mask vector itself be binary, although this is greatly preferable. If the mask vector is allowed to take on analog values, then it functions essentially as a weight vector. A weighting vector is still useful for disregarding insignificant bits in a recognition comparison, but an analog weighting vector does not offer nearly the computational efficiency which is provided by a binary mask vector. Moreover, preparation of a binary mask vector for a given word recognition set can be performed very simply and efficiently, as will be described below.

In addition, it should be noted that the novelty in the use of a masking vector is not by any means limited to use of an eight-bit feature vector, nor to recognition applications where the essential feature vector extraction step is based on zero crossing intervals, but can be applied to any speech recognition system whatsoever.

The method by which the reference vectors in a word template are generated will now be described.

To construct a template, the starting point is a large number of independent samples of that word as pronounced by a population which is sufficiently diverse to approximate that whose speech the recognizer will be required to recognize. (For example, if the speech recognizer in use will be exposed to spoken inputs from men, women and children having all of the common regional accents, then the initial data base should also be obtained from men, women, and children, and should also include as many as possible of the regional accent types which must be recognized in use.

Correspondingly, if the recognizer is to be operated in a speaker-dependent mode or is to be customized for a small group of speakers, the number of samples must remain large, but the speakers within the relevant set will be proportionately represented. For example, if four speakers are to be recognized, each should contribute an average of 25 samples to the data base.

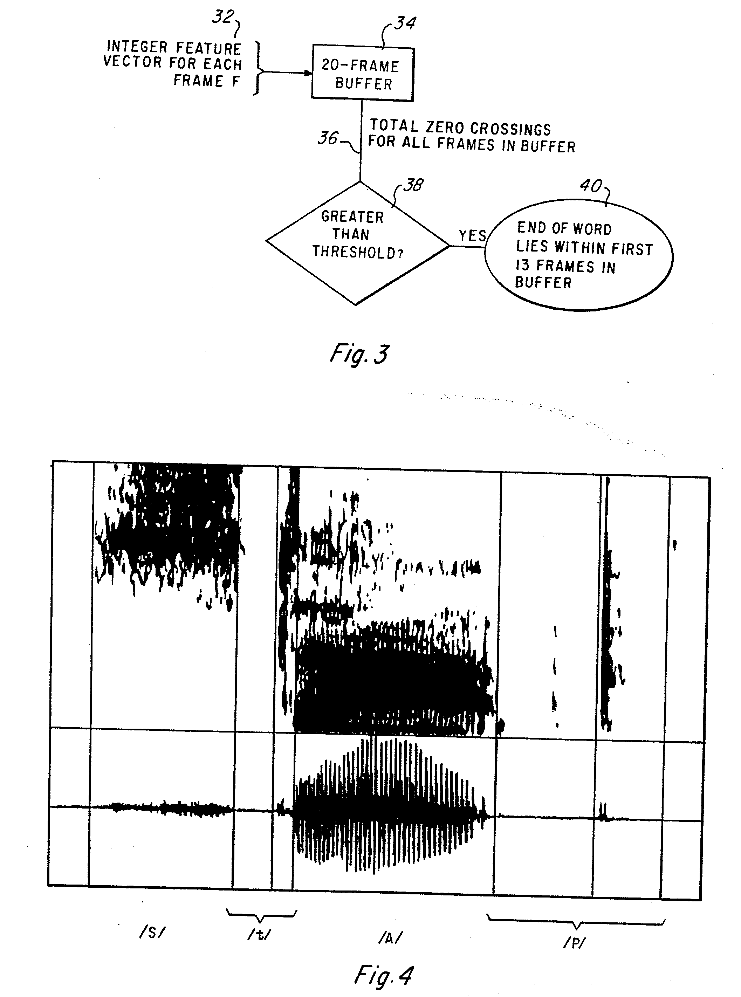

The first step is a manual classification step. Suppose that a template is to be constructed for the word "stop". This word has six distinct acoustic segments as shown in the spectrogram of Fig. 4. These are the initial sibilant/s/, stop and release/t/, vowel portion/A/, and the final stop and release/p/. These six segments are preferably marked interactively, with the aid of spectrogram and waveform plots, on graphics terminals, for each sample in the data base. Thus, this step manually establishes the location of corresponding phonemes within the data base sampled. This step is used because various speakers will vary the relative length of different phonemes within a word, and it is necessary, when estimating from the data sample what feature vector would correspond to a vowel/A/, that the computation not be distorted by time-warped samples in which the speaker was actually pronouncing a /t/ or a /p/. Of course, this time-alignment of the samples in the data base could be accomplished other ways, including automatic classification of the samples by phoneme boundaries according to, e.g., LPC characteristics, but the presently preferred embodiment uses manual classification at this step.

Thus, after this manual classification step, the segment within each sample in the data base which corresponds to the successive phonemes which must be included in the reference vector has been established. The average duration of each of the phonemic segments is then computed to establish the number of reference frames needed in each segment. For example, suppose the sibilant /s/ has an average duration of 130 msec. Then, at a reference frame period of 40 msec., three reference frames in the word template will correspond to the sibilant /s/. (The period of the reference frame in the presently preferred embodiment is exactly twice as long as the frame interval in the input speech, for reasons which will be discussed below.)

The next step is to locate, in each of the 100 samples, which portions of the sample shall be included in the computation of the expected characteristics of each of the three reference frames in the word template which are to correspond to the sibilant /s/. That is, in this example the three /s/ reference feature vectors would be computed based on measurements at three points evenly spaced within the duration of the phoneme /s/, for each sample in the data base. Thus, the result of this process is that, for each frame in the word template for which a referenced vector must be computed, a unique location within each sample in the data base to correspond to that frame has been identified.

The process by which each reference vector in the word template is computed, based on the corresponding portions of the various samples in the data base, will now be described. First, a tolerance number called a unanimity factor (nu) is chosen emperically. In the presently preferred embodiment nu is set equal to 0.93, but may be greater or lesser depending on the uniformity of the speakers in the data base, and to some extent on the size of the data base. However, in the presently preferred embodiment, a value greater than 90% is preferably used, and is preferably in the range of 90 to 97%.

The unanimity factor nu tells how many disagreements can be tolerated on any particular bit of the feature vector for corresponding frames we can tolerate before concluding that there is no concurrence of behavior over the population. That is, for example, suppose that nu is chosen equal to 0.93. In this case, if 93 or more of 100 samples in the data base have a value for the first analog parameter (at corresponding frame locations) which is larger than B1L, then the first elements of the feature vector and of the masked vector are set equal to 1. If 93 or more of the samples have a value for the first parameter of which is below B1L, then the first element of the reference feature vector is 0 and the first element of the masked vector is 1. That is, in this case the population would have agreed that the general behavior is to have the number of zero crossing intervals in the first "bin" less than the threshold B1L. However, if less than 93 samples agree in this respect, then the first element of the masked vector is set equal to zero, and the first element of the reference vector is a "don't care" value and can be 0 or 1.

Thus, this process generates a word template which is a time ordered sequence of vector pairs, namely a feature vector and a masked vector at each reference frame interval.

A sample of this process might be as follows:

```
          DETERMINE THE FEATURE VECTOR AT THE
              REFERENCE TIMES FOR EACH SAMPLE


    0    1    1    0    0    1    0    1   --  Sample 1 FV


    1    0    1    0    1    1    0    1   --  Sample 100 FV


    ------------------------------------------  Add Columnwise


    3   57   96   97   41   98   95   33   --  Sum Vector

                                           (Behavior Distribution)
        CHOOSE AN "UNANIMITY FACTOR"   -- e.g.  93%


    0    X    1    1    X    1    1    X   --  RF(I)
                                           (Feature Vector)

    1    0    1    1    0    1    1    0   --  RM(I)
                                           (Mask Vector)


          (Significant Group Behavior)
```

The basic distance measure, which compares one frame of speech input to some one frame of a word template has been described above. However, the word identification rests not merely on testing the identity of frame to frame, but rather on finding the similarity of a sequence of input frame to the sequence of reference vectors in a word template. In the presently preferred embodiment, a dynamic programming (time alignment) operation 20 is used to find an optimal subsequence match between the sequence of reference vectors in the word template and a subsequence of feature vectors in the speech input. This dynamic programming algorithm permits time-warping by various speakers to be accomodated, but also has other advantages. In particular, the end points are unconstrained. That is, no separate decision step needs to be made as to where in an input sequence of frames the end point of the word template should be identified to. Moreover, a second advantage of this approach is that the storage requirements are reduced, since the reference frame interval is twice the frame interval imposed on the speech input signal. In general, the unconstrained and point approach is accomplished by providing a cumulative cost profile, for each point in time, which assumes that the current input frame is the last frame. However, to economize on processor time, the preferred embodiment uses an end-of-word window instead, as will be discussed below.

Thus, the foregoing steps produce a scalar dissimilarity measure $D_{N,j}$ which shows the dissimilarity between an input frame j and a reference frame N. This dissimilarity measure is then transformed, through a dynamic programming procedure, into a minimal subsequence distance measure (scanning error) $E_{N,j}$, which is preferrably defined as follows:

$$E_{Nj} = D_{Nj} + \min\left\{ E_{N-1,j-1} + K, \quad E_{N-1,j-2}, \right.$$

$$\left. E_{N-1,j-3} + \frac{K}{3}, \quad E_{N-1,j-4} + K \right\}$$

The quantity "K" is a constant which is optionally used to impose a warping penalty. That is, the expected ratio of reference frames to sample frames is one reference frame to every two sample frames. However, if this is not in fact the actual spacing, then a penalty amount is added to the minimal subsequence distance for every reference in which the local ratio of input frames to reference frames is different from 2-1. Note that the penalty added where the ratio is locally 3-1 is much smaller than that imposed where th ratio is locally 4-1 or 1-1. Thus, only a modest penalty is added where the input speech is slightly slower than the reference speech rate (down to 1½ times as slow), but a substantially larger penalty is added if the input speech is faster than the reference speech, or is more than 1½ times as slow as the rate expected by the reference speech.

That is, where input frames are matched to reference frames at an average rate which is between 2-1 and 3-1, and where the time distribution of the input frame is the same as that of the reference frame, then the particular mappings of reference frame onto input frame within the optimal subsequence will vary between every other input frame and every third input frame, and the total speed-mismatch penalty will be a linear function of the speech rate mismatch. However, where the warping of the input sample is sufficiently nonlinear that, within the optimal subsequence, some adjacent pairs of the reference template sequence match either adjacent input frames or to input frames which are separated by three other input frames, an additional penalty will be added to the smooth penalty for linear warping. This additional penalty may be referred to as a nonlinear warping penalty, although it should be noted that nonlinear warping is penalized only if it causes some local portion of the reference-to-input mapping to be denser than 1-2 or sparser than 1-3. Thus, this warping penalty incorporates speech-rate information into the recognition process, but does not require large additional amounts of computation time.

The warping penalty is optional, and is not strictly necessary for practicing the present invention. That is, the iterative statement of the dynamic programming measure can be restated as

$$E_{Nj} = D_{Nj} + \min_{k \in [1, 4]} \left\{ E_{N-1, j-k} \right\}$$

The presently preferred embodiment does not use warping penalties to minimize the computational load.

Alternatively, a larger than 2-to-1 warping factor can be permitted, or a sparser ratio of reference templates to input frames could be used, as desired. The warping penalties can accordingly be widely varied.

The foregoing dynamic programming procedure can provide accumulative fit measure for each word in the vocabulary, at each input frame interval. In this case, the recognizer is capable of operating in a connected-speech recognition mode rather than an isolated-speech recogition mode.

However, this imposes a heavy additional processing load and is not the preferred embodiment of the invention.

That is, the processing load required to find accumulative optimal subsequence match at each input frame interval is too much for the economical implementations at which the present invention is especially directed. To reduce this processing load, words are preferably recognized only at word ending points identified by an end-of-word detector 22. The operation of the end-of-word detector 22 will now be described, with reference to Fig. 3.

In the presently preferred embodiment, the zero crossings are not only sorted into bins, but a count is kept of the total number of zero crossings.  For example, this can be done by adding together the counts in the various bins of the integer feature vectors 32 for all frames within a frame buffer 34, which may be, e.g., 20 frames long, depending on the bin threshold values.  This produces a total 36 for the zero crossings of all frames in the buffer 34, and this total 36 can then be tested (a step 38) against a threshold.  Alternatively, this can be done by simply keeping a direct running count of the number of zero crossings, and holding this as a directily computed parameter during each frame of input speech.  A further alternative is simply to count the number of high-frequency zero crossing for each frame, and sum those across frames.

The key test 38 which is implemented in the end-of-word decision of this aspect of the present invention is to ascertain whether the number of zero crossings exceeds a given number during a reasonably long period of time (e.g. 300 milliseconds).  This large number of zero crossings indicates that no low-frequency energy, and therefore presumably no speech, is present during this 300 millisecond window.  It should be noted that this is somewhat sensitive to the bias level used in the Schmitt trigger (or other center-clipping mechanism).  That is, if the bias level in the Schmitt trigger is set too high, then noise at the end of a word, in a quiet environment, will not be able to produce the high number of zero crossings required for the detection of end of word.  Correspondingly, if the bias level is too low, a long unvoiced consonant (such as the "s" at the end of a word such as "guess") may generate enough high-frequency zero crossings to trigger the end of word detector erroneously.

Thus, the end-of-word detector selectively indicates that an end-of-word has occurred.  If so, then word recognition is performed on the assumption that the word will have ended during  a second window period, which is not necessarily the same window over which the end-of-word operates. That is, in the presently preferred embodiment, an end-of-word is detected (step 40) when 300 milliseconds have occurred without input speech energy, and the first 200 milliseconds of the 300 millisecond end-of-word detection window are then searched for a hypothetical word ending point. However, this second window, during which an end-of-word is looked for, can be the same as or different from the end-of-word detection window, and can be varied within very broad parameters. The essential trade-off here is that, if the recognition window is made smaller, the processor load is reduced but the frequency of non-recognition errors is likely to be increased.

The invention as presently practiced is embodied in a VAX 11/780, with analog input and output connections (i.e., microphone, preamplifier, analog-to-digital converter, digital-to-analog converter, audio amplifier and loudspeaker). However, as discussed above, the present invention can be implemented on a cheap micro-computer system, and the contemplated best modes of the invention in the future are expected to be microprocessor or microcompluter embodiments.

In particular, embodiment of the present invention on a 8-bit microprocessor system is straight-forward. No expensive data converter chips or means for energy measurement is required. The only analog stages needed, in the preferred embodiment are the low-pass filter, differentiator, and schmitt trigger. If the present invention is embodied in a 16-bit system, the additional processing power and word length will mean simply that a slightly larger vocabulary can be accommodated, and will also make development of the vocabulary templates slightly easier.

As will be obvious to those skilled in the art, the present invention provides numerous broad points of novelty over the prior art of speech recognition. Therefore, the scope of the present invention can be embodied in numerous modifications and variations and is not limited as specified in the accompanying claims.

WHAT IS CLAIMED IS:

1. A method for recognizing speech comprising the steps of:

receiving an analog input speech signal;

conditioning said input signal, and measuring zero crossing intervals of said input signal to provide a sequence of binary feature vectors at predetermined frame intervals;

comparing each said binary feature vector with each of a plurality of binary reference vectors, said reference vectors being organized in sequences, each said reference vector sequence corresponding to a word which can be recognized, to provide a distance measure with respect to each of said reference vectors for each successive one in said sequence of feature vectors; and

recognizing words in accordance with said distance measures between each said sequence of said reference vectors and successively received ones of said frames of said digital signal.

2. A method for recognizing speech comprising the steps of:

receiving an analog input speech signal;

conditioning said input signal; and measuring zero crossing intervals of said digital signal to provide a sequence feature vector at predetermined frame intervals;

comparing said feature vector with each of a plurality of reference vectors, said reference vectors being organized in sequences, each said reference vector sequence corresponding to a word which can be recognized, to provide a distance measure with respect to each of said reference vectors for each successive one in said sequence of feature vectors; and

recognizing words in accordance with said distance measures between each said sequence of said reference vectors

and successively received ones of said frames of said digital signal;

said recognizing step comprising a dynamic programming step to provide an optimal subsequence match between said sequence of feature vectors and each said sequence of reference vectors.

3. A method for recognizing speech comprising the steps of:

receiving an analog input speech signal;

conditioning said input signal, and measuring zero crossing intervals of said input signal to provide a sequence of feature vectors at predetermined frame intervals;

comparing said feature vector with each of a plurality of reference vectors, said reference vectors being organized in sequences, each said reference vector sequence corresponding to a word which can be recognized, to provide a distance measure with respect to each of said reference vectors for each successive one in said sequence of feature vectors; and

recognizing words in accordance with said distance measures between each said sequence of said reference vectors and successively received ones of said frames of said digital signal;

said recognizing step being performed only when an end of word has been identified, said end of word identification step comprising:

monitoring zero crossings of said input signal, and declaring an end of word whenever the average frequency of said zero crossings exceeds an endpoint target zero crossing frequency for a time longer than predetermined number of milliseconds.

4. The method of Claim 2, wherein said feature vectors are binary and said reference vectors are binary, and wherein said comparing step comprises a Hamming distance measurement.

5. The method of Claim 1, wherein said conditioning step comprises center clipping said analog input signal.

6. The method of Claim 1, wherein said conditioning step performs an operation corresponding to differentiation of said input signal.

7. A word recognizer, comprising:

input means for receiving an analog input signal corresponding to speech;

a signal processor, said processor conditioning said input signal according to a predetermined characteristic and measuring zero crossing intervals of said conditioned signal to provide a binary feature vector;

distance measurement means, said distance measurement means comparing said binary feature vector with each of a plurality of binary reference vectors (said reference vectors being organized in sequences corresponding to words) to povide a distance measure at least partially corresponding to a hamming distance measure with respect to said reference vectors for each successive one of said feature vectors;

recognition means for recognizing words in accordance with the sequence of said distance measures between each said sequence of said reference vectors and successively received ones of said feature vectors.

8. A word recognizer, comprising:

input means for receiving an analog input signal corresponding to speech;

a signal processor, said processor conditioning said input signal according to a predetermined characteristic and measuring zero crossing intervals of said conditioned signal to provide a feature vector;

distance measurement means, said distance measurement means comparing said feature vector with each of a plurality of reference vectors (said reference vectors being organized in sequences corresponding to words) to provide a distance measure at least partially corresponding to a hamming distance measure with respect to said reference vectors for each successive one of said feature vectors;

recognition means for recognizing words in accordance with the sequence of said distance measures between each said sequence of said reference vectors and successively received ones of said feature vectors, said recognizer also performing a dynamic programming step to provide an optimal subsequence match between successively received ones of said feature vectors and said sequences of reference vectors.

9.    A word recognizer, comprising:

input means for receiving an analog speech  input signal;

a signal conditioner connected to said input means, said signal conditioner measuring said input signal to provide a sequence of feature vectors at predetermined frame intervals;

distance measurement means, connected to said signal conditioner, for comparing each said feature vector with each of a plurality of reference vectors, said reference vectors being organized in sequences, each said reference vector sequence corresponding to a word which can be recognized, to provide a distance measure with respect to each of said reference vectors for each successive one of said feature vectors;

means for recognizing words in accordance with said distance measures between each said sequence of said reference vectors and successive ones in said sequence of feature vectors;

each said sequence of reference vectors having a mask vector associated therewith, said distance measurement means ignoring elements of each said reference vector which are designated as "don't care" bits by said corresponding mask vector.

10.    The recognizer of Claim 9,  wherein said feature vectors are binary, and wherein said distance measure corresponds to a Hamming distance measure between said feature vector and said reference vector as modified in accordance with said associated mask vector.

11.    The recognizer of Claim 9, wherein each said mask vector is a binary vector comprising a plurality of bits, each said bit of said mask vector selectively assuming a predetermined value to indicate that a corresponding portion of said corresponding sequence of reference vectors is to be ignored in said distance measure.

12. The recognizer of Claim 9, wherein one mask vector is uniquely associated with each of said reference vectors.

13. The recognizer of Claim 9, wherein one mask vector is uniquely associated with each of said reference vectors, and wherein said mask vector has the same number of bits as said associated reference vector.

14. A method for recognizing speech, comprising the steps of:

receiving an analog input signal corresponding to speech;

conditioning and measuring said input signal to provide a sequence of feature vectors at predetermined frame intervals;

comparing each said feature vector with each of a plurality of reference vectors, said reference vectors being organized in sequences, each said reference vector sequence corresponding to a word which can be recognized, to provide a distance measure with respect to each of said reference vectors for each successive one of said feature vectors; and

recognizing words in accordance with said distance measures between each said sequence of said reference vectors and successive ones in said sequence of feature vectors;

each said sequence of reference vectors having a mask vector stored therewith, said distance measure ignoring elements of each said reference vector which are designated as "don't care" bits by said mask vector.

15.    The method of Claim 14, wherein each said mask vector is a binary vector comprising a plurality of bits, each said bit of said mask vector selectively assuming a predetermined value to indicate that a corresponding portion of said corresponding sequence of reference vectors is to be ignored in said distance measure.

SPEECH SIGNAL 10 → | PRE-AMP AND DIFFERENTIATOR 12 | → | ZERO CROSSING DETECTOR 13 | → | PROCESSING MICROCOMPUTER 15 | → DECLARATION 25

Fig.1

*Fig. 2*

0125422

Fig. 3

/S/    /t/    /A/    /P/

Fig. 4

European Patent Office

**0125422**
Application number

**EUROPEAN SEARCH REPORT**

EP 84 10 2849

## DOCUMENTS CONSIDERED TO BE RELEVANT

| Category | Citation of document with indication. where appropriate, of relevant passages | Relevant to claim | CLASSIFICATION OF THE APPLICATION (Int. Cl. ³) |
|---|---|---|---|
| X | US-A-3 742 143 (M. AWIPI)<br><br>* Column 1, line 53 - column 2, line 10 * | 1-4,7, 8 | G 10 L 1/04 |
| X | EP-A-0 065 829 (INTERSTATE ELECTRONICS CORP.)<br>* Claims 1,9 * | 1-3,7, 8 | |
| X | PROCEEDINGS OF THE INSTITUTION OF ELECTRICAL ENGI NEERS, vol. 116, no. 4, April 1969, pages 617-623, Stevenage, GB; W. BEZDEL et al.: "Speech recognition using zero-crossing measurements and sequence information"<br>* Abstract; paragraph 2.1: "Signal processing" * | 1-3,5, 7,8 | |
| X | ICASSP 82 (IEEE INTERNATIONAL CONFERENCE ON ACOUSTICS, SPEECH AND SIGNAL PROCESSING), Paris, 3rd-5th May 1982, vol. 2, pages 879-882, IEEE, New York, USA; M. BAUDRY et al.: "A simple and efficient isolated words recognition system"<br>* Pages 881,882: "Isolated words global recognition system" * | 1-3,6- 8 | |

TECHNICAL FIELDS SEARCHED (Int Cl. ³)

G 10 L 1/04

-/-

The present search report has been drawn up for all claims

| Place of search | Date of completion of the search | Examiner |
|---|---|---|
| THE HAGUE | 26-07-1984 | ARMSPACH J.F.A.M. |

**European Patent Office**

## DOCUMENTS CONSIDERED TO BE RELEVANT

| Category | Citation of document with indication. where appropriate, of relevant passages | Relevant to claim | CLASSIFICATION OF THE APPLICATION (Int. Cl. ³) |
|---|---|---|---|
| X | ICASSP 82 (IEEE INTERNATIONAL CONFERENCE ON ACOUSTICS, SPEECH AND SIGNAL PROCESSING), Paris, 3rd-5th May 1982, vol. 2, pages 1259-1261, IEEE, New York, USA; K.K: PALIWAL et al.: "A modification over Sakoe and Chiba's dynamic time warping algorithm for isolated word recognition" * Page 1259, right-hand column, line 23 - page 1260, left-hand column, line 11 * | 1,2,6-8 | |
| | --- | | |
| A | THE BELL SYSTEM TECHNICAL JOURNAL, vol. 54, no. 2, February 1975, pages 297-315, New York, USA; L.R. RABINER et al.: "An algorithm for determining the endpoints of isolated utterances" * Pages 306-307; figure 9 * | 3 | TECHNICAL FIELDS SEARCHED (Int. Cl. ³) |
| | --- | | |
| A | US-A-4 158 750 (H. SAKOE et al.) * Abstract * | 3 | |
| | ---     -/- | | |

The present search report has been drawn up for all claims

| Place of search | Date of completion of the search | Examiner |
|---|---|---|
| THE HAGUE | 26-07-1984 | ARMSPACH J.F.A.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82

0125422

European Patent
Office

EUROPEAN SEARCH REPORT

Application number

EP 84 10 2849

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | ELECTRONICS AND COMMUNICATIONS IN JAPAN, vol. 46, no. 3, March 1963, pages 10-21, Washington, USA; H. SUZUKI et al.: "Binary coding for recognition learning of Japanese vowels" <br> * Page 10, left-hand column, lines 37-40, right-hand column, lines 1-15, 27-37 * | 4,9,14 | |
| A | JOURNAL OF THE AUDIO ENGINEERING SOCIETY, vol. 15, no. 4, October 1967, pages 414-418, New York, USA; P.W. ROSS: "A limited-vocabulary adaptive speech-recognition system" <br> * Abstract; figure 3 * | 4 | |
| A | GB-A-1 225 242 (ELECTRICAL AND MUSICAL INDUSTRIES LTD.) <br> * Claims * | 9,14 | TECHNICAL FIELDS SEARCHED (Int. Cl. ³) |
| A | PATENTS ABSTRACTS OF JAPAN, vol. 6, no. 46(P-107)(924), 24th March 1982; & JP - A - 56 162 183 (HITACHI SEISAKUSHO K.K) 12-12-1981 <br> * Whole abstract * | 9,14 | |
| A | US-A-3 727 193 (V.W. BOLIE) <br> * Column 1, lines 31-58; column 2, lines 23-26; column 12, lines 20-24 * | 9,12, 14 | |

--- -/-

The present search report has been drawn up for all claims

| Place of search | Date of completion of the search | Examiner |
|---|---|---|
| THE HAGUE | 26-07-1984 | ARMSPACH J.F.A.M. |

## European Patent Office

## EUROPEAN SEARCH REPORT

| DOCUMENTS CONSIDERED TO BE RELEVANT | | Page 4 |
|---|---|---|
| **Category** | Citation of document with indication, where appropriate, of relevant passages | **Relevant to claim** | **CLASSIFICATION OF THE APPLICATION (Int. Cl. 3)** |

| Category | Citation of document with indication, where appropriate, of relevant passages | Relevant to claim | CLASSIFICATION OF THE APPLICATION (Int. Cl. 3) |
|---|---|---|---|
| P,X | ICASSP 83 (IEEE INTERNATIONAL CONFERENCE ON ACOUSTICS, SPEECH AND SIGNAL PROCESSING), Boston, 14th-16th April 1983, vol. 2, pages 753-756, IEEE, New York, USA; P.K. RAJASEKARAN et al.: "Microcomputer implementable low cost speaker-independent word recognition" * Whole article * | 1-14 | |
| | ----- | | |
| | | | **TECHNICAL FIELDS SEARCHED (Int. Cl. 3)** |

The present search report has been drawn up for all claims

| Place of search THE HAGUE | Date of completion of the search 26-07-1984 | Examiner ARMSPACH J.F.A.M. |
|---|---|---|